# EUROPÄISCHE PATENTSCHRIFT

(11) **EP 0 459 236 B1**
(45) Veröffentlichungstag und Bekanntmachung des Hinweises auf die Patenterteilung: **30.03.1994**
(21) Anmeldenummer: 91107912.7
(22) Anmeldetag: 16.05.1991
(51) Int. Cl.: H04B 7/26, H04Q 7/04

(54) **Verfahren zum Aufbau von LOS-Funkverbindungen von mobilen Sende/Empfangs- stationen zu anderen mobilen oder stationären Gegenstationen**
Method for building-up LOS radio links from mobile transmitting-receiving stations to other mobile or fixed remote stations
Procédé pour former des communications radio en visibilité directe de postes émetteur-récepteur mobiles avec d'autres postes correspondants mobiles ou fixes

(30) Priorität: 29.05.1990 DE 4017234
(43) Veröffentlichungstag der Anmeldung: 04.12.1991
(73) Patentinhaber: Rohde & Schwarz GmbH & Co. KG, D-81671 München (DE)
(72) Erfinder: Reitberger, Peter, Dr. Ing., W-8000 München 60 (DE)
(74) Vertreter: Graf, Walter, Dipl.-Ing.

(56) Entgegenhaltungen:
- EP-A- 0 367 935
- US-A- 4 670 906
- Patent Abstracts of Japan, Unexamined Applications, E. Field, Band 9, Nr. 318, 13.12.85, The Patent Office Japanese Government, Seite 20 E 366
- Patent Abstracts of Japan, Unexamined Applications, E Field, Band 9, Nr. 325, 20.12.85, The Patent Office Japanese Government, Seite 156 E 368

## Beschreibung

Die Erfindung betrifft ein Verfahren zum Aufbau von sogenannten LOS (line of siyht = optische Sicht) -Funkverbindunyen zwischen mobilen Sende/Empfangs-Stationen und anderen mobilen oder stationären Sende/Empfangs-Stationen in einem vorgegebenen Betriebsgebiet und zwar vorzuysweise im Frequenzbereich über 1 GHz.

Bei LOS-Funkverbindungen, wie sie im Frequenzbereich über 30 MHz teilweise, im Frequenzbereich über 200 MHz überwiegend und im Frequenzbereich über 1 GHz ausschließlich anyewendet werden, ergeben sich starke Einschränkungen bei Verwendung in mobilen Sende/Empfangs-Stationen, da bei wechselndem Standort der mobilen Station die jeweilige Funkfelddämpfung zwischen dieser Rufstation und einer anderen mobilen oder stationären Gegenstation nicht bekannt ist.

Zur Verhinderung einer Überlastung eines Funktelefonnetzes ist es bekannt, laufend die Zahl der sich in einer Funkzelle aufhaltenden mobilen Funktelefone festzustellen und dabei auch die Zuordnung der Funktelefone zu benachbarten Funkzellen entsprechend den geographischen und topographischen Bedingungen des betreffenden Teilgebietes zu bestimmen (DE 34 41 722). Hierbei ist es auch bekannt, die Übertragungsqualität der Funkverbindung laufend zu verfolyen und bei einer dynamischen Zellgrößensteuerung zu berücksichtigen.

Bei mobilen Funknetzen ist es ferner bekannt, die Funkzonengrenze zwischen zwei benachbarten Funkzonen durch eine relative Entfernungsmessung zwischen einem mobilen Teilnehmer und festen Stationen (Funkkonzentratoren) zu ermitteln (DE 33 35 128). Ferner ist ein Funksystem bekannt, bei dem die miteinander verkehrenden Funkstationen die Sendeleistung der jeweils anderen Station in Abhängigkeit von der Übertragungsqualität einstellen (DE 34 17 233). Bei einem Funknetz mit einer Vielzahl von mobilen Stationen ist es auch bekannt, jede Station als Relais zwischen paarweise kommunizierenden Mobilstationen wirken zu lassen (DE 33 37 648). Schließlich ist es bei mobilen Funknetzen bekannt, Feldstärkemessungen durchzuführen, um ein Kriterium für die Umschaltung eines beweglichen Teilnehmers von einem Funkbereich in den nächsten zu erhalten (DE 30 12 484).

Bei einem Autofahrer-Navigationssystem, bei dem dem Fahrer auf einem Bildschirm die Landkarte der Umgebung seines momentanen Standortes angezeigt wird (Elektronik 1987, Heft 20, Seite 30) ist es ferner bekannt, das Aufsuchen des jeweils relevanten Landkartenausschnittes automatisch mittels der Standortinformationen der ortsfesten Funkstationen eines zellularen Funktelefonnetzes durchzuführen (EP 0 367 935). Aus den an die mobile Funkstation im Auto übertragenen Stationsnummern der Feststationen wird der ungefähre Standort der mobilen Funkstation festgestellt und so automatisch der jeweils relevante Landkartenausschnitt angezeigt.

Diese bekannten Maßnahmen sind zum Aufbau von optimalen LOS-Funkverbindungen und den damit zusammenhängenden Problemen nicht geeignet.

Es ist daher Aufgabe der Erfindung, ein einfaches Verfahren aufzuzeigen, mit dem optimale LOS-Funkverbindungen auch von mobilen Sende/Empfangs-Stationen im Höchstfrequenzbereich über 1 GHz aufgebaut werden könne.

Diese Aufgabe wird ausgehend von einem Verfahren laut Oberbegriff des Hauptanspruches durch dessen kennzeichnende Merkmale gelöst. Vorteilhafte Weiterbildungen ergeben sich aus den Unteransprüchen.

Bei dem erfindungsgemäßen Verfahren wird unmittelbar in jeder einzelnen mobilen Sende/Empfangs-Station aufgrund der dort abgespeicherten geographischen und topographischen Daten des Betriebsgebietes für den momentanen Standort die jeweilige Funkfelddämpfung zur Gegenstation errechnet und daraus kann dann unmittelbar durch entsprechende Veränderung der Sende- und/oder Empfangs-Parameter dieser mobilen Rufstation die beste funktechnische Erreichbarkeit eingestellt werden. Dies kann beispielsweise durch entsprechende Änderung der Antennenhohe bzw. aurch Änderung der Richtcharakteristik der Antenne erfolgen oder durch entsprechende Änderung der Sendeleistung oder der Empfängerempfindlichkeit oder aber auch durch Änderung der Frequenz unter Berücksichtigung der Frequenzabhängigkeit des Empfängers. Diese Anderung der Sender- und/oder Empfänger-Parameter kann in Abhängigkeit von der errechneten Funkfelddämpfung natürlich auch automatisch durch entsprechende Steuereinrichtungen in der Mobilstation durchgefünrt werden. Eine andere Möglichkeit der Verbesserung der funktechnischen Erreichbarkeit besteht darin, den Standort der Mobilstation zu verändern, bis die gewünschten optimalen Sende/Empfangs-Bedingungen erreicht sind. Dazu hat es sich als vorteilhaft erwiesen, gleichzeitig die funktechnische Erreichbarkeit von benachbarten Standorten der Rufstation zu berechnen und anzuzeigen, so daß der Benutzer der mobilen Station sofort den bestmöglichen Standort einnehmen kann.

Unter "geographischen Daten des Betriebsgebietes" werden Daten verstanden, wie sie auf Landkarten angegeben sind, beispielsweise die absolute Höhe über Meeresspiegel (NN). Unter topographischen Daten "wird der Geländeverlauf des Betriebsgebietes, Geländeerhebungen, Täler usw. verstanden (Oberflächenstruktur), unter "morphologischen Daten" werden Einzelheiten der Bebauung, der Bewaldung bzw. des Aufwuchses des Betriebsgebietes verstanden. All diese Daten sind für verschiedene Länder und Gebiete bereits in digitaler Form abgespeichert in Datenspeichern vorhanden und können daher leicht für den erfindungsgemäßen Zweck benutzt werden. Sie können während des Betriebes auch auf einfache Weise laufend ergänzt werden, beispielsweise dadurch, daß die mobile Rufstation während ihrer Bewegung im Betriebsgebiet beispielsweise durch Videokameras, Radargeräte oder dergleichen laufend die Topographie und Morphologie des Betriebsgebietes aufnimmt und mit den bereits abgespeicherten Daten vergleicht und eventuell laufend ergänzt, wenn beispielsweise zwischenzeitlich ein hohes Bauwerk im Betriebsgebiet entstanden ist. Solche durch laufende Beobachtung festgestellten Änderungen oder Ergänzungen der Topographie und Morphologie werden dann unmittelbar in den elektronischen Speicher mit eingegeben und können beim Aufbau der Funkverbindung entsprechend berücksichtigt werden.

Die Berechnung der Funkfelddämpfung, d.h. der funktechnischen Erreichbarkeit zwischen einer Sendestation und einer Empfangsstation unter Berücksichtigung der geographischen und topographischen Daten eines Betriebsgebietes ist zur Planung von großflächigen Rundfunknetzen an sich bekannt (CCIR Report 567 - 3). Nach einer empirischen Formel (Formel nach Okumura) kann danach die Funkfelddämpfung in Abhängigkeit von der Frequenz, der Entfernung, der effektiven Antennenhöhe der Mobilstation über Grund und der effektiven Antennenhöhe der Gegenstation errechnet werden (Berechnung nach geographischen Daten). Außerdem kann nach diesen bekannten Modellrechnungen diese nach geographischen Daten errechnete Funkfelddämpfung noch durch Faktoren korrigiert werden, welche die Bebauungs- und Bepflanzungsdichte am Standort berücksichtigen (Berücksichtigung der topographischen und morphologischen Daten). Diese bekannte Modellrechnung wird unter Berücksichtigung aller abgespeicherten geographischen, topographischen und morphologischen Daten des Betriebsgebietes für den jeweiligen momentanen Standort der Rufstation und der Gegenstation unmittelbar in jeder mobilen Station durchgeführt und es wird damit unmittelbar die Funkfelddämpfung zwischen Rufstation und Gegenstation ermittelt, die dann beim eigentlichen Aufbau der Funkverbindung entsprechend berücksichtigt oder geändert werden kann.

Das erfindungsgemäße Verfahren ist insbesondere für Mobilfunksysteme geeignet, bei denen eine Vielzahl von mobilen Stationen in einem Betriebsgebiet gleichzeitig arbeiten, denn in diesem Fall können laufend die jeweils errechneten Funkfelddämpfungen zwischen den mobilen Stationen untereinander und zwischen diesen mobilen Stationen und den meist in solchen Systemen vorgesehenen stationären Stationen ausgetauscht werden. Stellt eine Rufstation beim Aufbau einer Funkverbindung fest, daß beispielsweise ein direkte Verbindung zwischen ihr und einer Gegenstation (mobil oder stationär) zu schlecht ist, sie jedoch eine gute Verbindung mit einer Nachbarstation hat, die ihrerseits eine gute Verbindung zu der gewünschten Gegenstation besitzt, so kann der Verbindungsaufbau in bekannter Weise über diese Nachbarstation als Relaisstation durchgeführt werden.

Gemäß einer Weiterbildung der Erfindung hat es sich als zweckmäßig erwiesen, nach Aufbau einer Funkverbindung während des anschließenden Funkbetriebes zwischen der Rufstation und der Gegenstation die tatsächlich auftretenden charakteristischen Funkparameter wie Senderpegel, Empfangspegel, Phasenjitter, S/N-Verhältnis, Übertragungsdämpfung usw. zu messen und für den jeweiligen Standort der Mobilstation im elektronischen Speicher mit abzuspeichern, so daß im Speicher jeder Mobilstation schließlich eine Datenbank entsteht, die neben den geographischen und topographischen Daten des Betriebsgebietes für verschiedene Standorte jeweils die Güte der Funkverbindung zu ausgewählten Gegenstationen wiedergibt. Die mobile Rufstation kann damit zum Aufbau einer Verbindung bei Eingabe ihres momentanen Standortes sofort die besten Voraussetzungen für eine LOS-Funkverbindung mit einer ausgewählten Gegenstation abfragen, so daß unter Umständen eine Berechnung aufgrund der geographischen Daten überflüssig wird.

Das erfindungsgemäße Verfahren ermöglicht den optimalen Betrieb eines Mobilfunksystems, da durch unmittelbare Änderung der Sende/Empfangs-Parameter ggf. auch der Modulationsart der ausgesendeten Signale ganz spezielle Funkverbindungsvoraussetzungen im Betriebsgebiet erreicht werden können. So ist es beispielsweise möglich, die Parameter aufgrund der errechneten Daten so zu wählen, daß die Verbindung zwischen einer mobilen Station 1 und einer Gegenstation 4 direkt optimal gut ist, die Antennenhöhe der Station 4 aber eine vorbestimmte Höhe nicht überschreitet, der Empfangspegel in der Station 3 einen bestimmten Schwellwert überschreitet und die Abhörbarkeit der Verbindung zwischen Station 1 und Station 2 ab einer bestimmten Entfernung nicht mehr möglich ist.

Das erfindungsgemäße Verfahren ermöglicht auch das gezielte Ausbringen von aktiven und/oder passiven Reflektoren zur Verbesserung der Funkverbindung an genau definierten, meist exponierten geographischen Stellen im Betriebsgebiet. Solche zusätzlichen Reflektoren reflektieren entweder die einfallenden Signale der Rufstation passiv oder sie verstärken die Signale und senden sie in einer bestimmten Richtung leistungsverstärkt wieder aus (Frequenzumsetzer), so daß die Signale auch in ein Gebiet übertragen werden können, das durch eine direkte LOS-Verbindung nicht erreichbar ist. Solche passiven Reflektoren können beispielsweise Aluminiumstreifen (Düppel) sein, die in einem bestimmten Gebiet in der Luft ausgebracht werden und so ein Gebiet zugänglich machen, das zuvor im Funkschatten einer Rufstation lag. Auch durch Ionisierung bestimmter Luftschichten durch chemische Reaktionen in der Atmosphäre oder durch energiereiche Lichtanregung (Laserbestrahlung) können solche passiven Reflektorschichten erzielt werden.

## Patentansprüche

1. Verfahren zum Aufbau von LOS-Funkverbindungen zwischen mobilen Sende/Empfangs-Rufstationen und anderen mobilen oder stationären Sende/Empfangs-Gegenstationen in einem vorgegebenen Betriebsgebiet, dadurch **gekennzeichnet**, daß jede mobile Station einen elektronischen Speicher und einen zugeordneten Rechner aufweist, wobei im Speicher jeweils die geographischen und topographischen Daten des Betriebsgebietes gespeichert sind, und vor Aufbau einer Funkverbindung die momentanen Standortdaten der die Verbindung aufbauenden mobilen Rufstation und der gerufenen mobilen oder stationären Gegenstation in den Rechner eingegeben werden und aufgrund der abgespeicherten geographischen und topographischen Daten des Speichers die Funkfelddämpfung zwischen diesen beiden Stationen errechnet wird.

2. Verfahren nach Anspruch 1, dadurch **gekennzeichnet**, daß die errechnete Funkfelddämpfung in der mobilen Station angezeigt wird.

3. Verfahren nach Anspruch 1 oder 2, dadurch **gekennzeichnet**, daß in Abhängigkeit von der errechneten Funkfelddämpfung die Sendeparameter des Senders und/oder die Empfangsparameter des Empfängers der mobilen Station auf die beste funktechnische Erreichbarkeit eingestellt werden.

4. Verfahren nach Anspruch 3, dadurch **gekennzeichnet**, daß in Abhängigkeit von der errechneten Funkfelddämpfung die Antennenhöhe eingestellt wird.

5. Verfahren nach Anspruch 3 oder 4, dadurch **gekennzeichnet**, daß in Abhängigkeit von der errechneten Funkfelddämpfung die Antennencharakteristik eingestellt wird.

6. Verfahren nach Anspruch 3, 4 oder 5, dadurch **gekennzeichnet**, daß in Abhängigkeit von der errechneten Funkfelddämpfung die Leistung des Senders und/oder die Empfindlichkeit des Empfängers der Station eingestellt wird.

7. Verfahren nach einem der vorhergehenden Ansprüche 3 bis 6, dadurch **gekennzeichnet**, daß in Abhängigkeit von der errechneten Funkfelddämpfung die Sende/Empfangs-Frequenz der Station eingestellt wird.

8. Verfahren nach einem der vorhergehenden Ansprüche, dadurch **gekennzeichnet**, daß zusätzlich zur Funkfelddämpfung des momentanen tatsächlichen Standortes der Rufstation die entsprechenden Funkfelddämpfungen unmittelbar benachbarter Standorte errechnet werden und der Verbindungsaufbau von dem damit errechneten optimalen Standort aus durchgeführt wird, bei dem die Funkfelddämpfung ein Minimum ist.

9. Verfahren nach einem der vorhergehenden Ansprüche, dadurch **gekennzeichnet**, daß die jeweils errechneten Funkfelddämpfungen von mehreren im Betriebsgebiet arbeitenden mobilen Sende/Empfangs-Stationen untereinander und mit eventuell stationären Gegenstationen ausgetauscht werden und der Verbindungsaufbau über den optimalen Funkverbindungsweg zwischen einer Rufstation und einer ausgewählten Gegenstation gegebenenfalls über benachbarte mobile Sende/Empfangs-Stationen als Relaisstationen erfolgt, bei dem die Funkfelddämpfung ein Minimum ist.

10. Verfahren nach einem der vorhergehenden Ansprüche, dadurch **gekennzeichnet**, daß die im Speicher jeder mobilen Station gespeicherten topographischen und morphologischen Daten durch optische Beobachtungen des Geländes laufend korrigiert und aktualisiert werden.

11. Verfahren nach einem der vorhergehenden Ansprüche, dadurch **gekennzeichnet**, daß nach Aufbau einer Funkverbindung zwischen einer Rufstation und einer Gegenstation die tatsächlichen charakteristischen Funkparameter gemessen und unter den Standortdaten der Ruf- und/oder Gegenstation im Speicher mit abgespeichert werden.

12. Verfahren nach einem der vorhergehenden Ansprüche, dadurch **gekennzeichnet**, daß die zum Aufbau einer Funkverbindung vorgenommenen Einstellungen am Sender und/oder Empfänger der Rufstation unter den Standortdaten der Ruf- und/oder Gegenstation im Speicher mit abgespeichert werden.

13. Verfahren nach einem der vorhergehenden Ansprüche, dadurch **gekennzeichnet**, daß die errechnete Funkfelddämpfung durch Ausbringen von aktiven und/oder passiven Reflektoren im Betriebsgebiet verbessert wird.

## Claims

1. Method of establishing LOS radio links between mobile transmitting and receiving signalling stations and other mobile or stationary transmitting and receiving opposite or remote stations in a given operating territory, characterised in that each mobile station has an electronic memory and an associated computer, the particular geographical and topographical data for the operating territory being stored in the memory, and before establishing a radio link the current location data of the mobile signalling station establishing the link and of the mobile or stationary remote station receiving the signal being input into the computer and the path or transmission loss between these two stations being calculated on the basis of the geographical and topographical data stored in the memory.

2. Method according to claim 1, characterised in that the calculated path or transmission loss is displayed in the mobile station.

3. Method according to claim 1 or 2, characterised in that in dependence on the calculated path or transmission loss the transmitting parameters of the transmitter and/or the receiving parameters of the receiver of the mobile station are adjusted to the best available radio engineering modalities.

4. Method according to claim 3, characterised in that the antenna height is adjusted in dependence on the path or transmission loss calculated.

5. Method according to claim 3 or 4, characterised in that the radiation characteristic is adjusted in dependence on the path or transmission loss calculated.

6. Method according to claim 3, 4 or 5, characterised in that the power of the transmitter and/or the sensitivity of the receiver of the station is adjusted in dependence on the path or transmission loss calculated.

7. Method according to any of the preceding claims 3 to 6, characterised in that the transmitting/receiving frequency of the station is adjusted in dependence on the path or transmission loss calculated.

8. Method according to any of the preceding claims, characterised in that in addition to the path or transmission loss of the current actual location of the signalling station, the corresponding path or transmission losses of immediately adjacent locations are calculated and the link is established from the optimum location thereby calculated, at which the path or transmission loss is minimised.

9. Method according to any of the preceding claims, characterised in that the path or transmission losses calculated between each of a plurality of mobile transmitting and receiving stations operating in the territory and from said mobile stations with possible stationary remote stations are interchanged and the link minimising the path or transmission loss is established over the optimum route for the radio link between a signalling station and a selected remote station, if appropriate via neighbouring mobile transmitting and receiving stations as relay stations.

10. Method according to any of the preceding claims, characterised in that the topographical and morphological data stored in the memory of each mobile station are continually corrected and updated by optical observations of the terrain.

11. Method according to any of the preceding claims, characterised in that once a radio link has been established between a signalling station and a remote station, the actual characteristic radio parameters are measured and stored in the memory under the location data in respect of the signalling and/or remote station.

12. Method according to any of the preceding claims, characterised in that the adjustments for establishing a radio link made at the transmitter and/or receiver of the signalling station are also stored in the memory under the location data of the signalling and/or remote station.

13. Method according to any of the preceding claims, characterised in that the calculated path or transmission loss is improved by setting up active and/or passive reflectors in the operating territory.

## Revendications

1. Procédé pour établir des liaisons radio en visibilité directe (LOS) entre des postes d'appel émetteur-récepteur et d'autres postes émetteur-récepteur opposés mobiles ou fixes dans une zone de trafic prédéfinie, procédé caractérisé en ce que chaque poste mobile présente une mémoire électronique et un ordinateur associé, dans lequel les données géographiques et topographiques de la zone de trafic sont stockées en mémoire, et, avant l'établissement d'une liaison radio, on introduit les données de l'emplacement momentané du poste d'appel mobile établissant la liaison et du poste opposé mobile ou fixe appelé dans l'ordinateur, et on calcule l'affaiblissement du champ radio entre ces deux postes sur la base des données géographiques et topographiques stockées de la mémoire.

2. Procédé selon la revendication 1, caractérisé en ce qu'on indique l'affaiblissement du champ radio calculé dans le poste mobile.

3. Procédé selon la revendication 1 ou 2, caractérisé en ce qu'en fonction de l'affaiblissement du champ radio calculé, les paramètres d'émission de l'émetteur et/ou les paramètres de réception du récepteur du poste mobile sont réglés sur les deux possibilités d'obtention de la communication radio.

4. Procédé selon la revendication 3, caractérisé en ce qu'on règle la hauteur de l'antenne en fonction de l'affaiblissement du champ radio calculé.

5. Procédé selon la revendication 3 ou 4, caractérisé en ce qu'on règle la caractéristique de l'antenne en fonction de l'affaiblissement du champ radio calculé.

6. Procédé selon la revendication 3, 4 ou 5, caractérisé en ce qu'on règle la puissance de l'émetteur et/ou la sensibilité du récepteur du poste en fonction de l'affaiblissement du champ radio calculé.

7. Procédé selon l'une des revendications précédentes 3 à 6, caractérisé en ce qu'on règle la fréquence d'émission-réception du poste en fonction de l'affaiblissement du champ radio calculé.

8. Procédé selon l'une des revendications précédentes, caractérisé en ce qu'en plus de l'affaiblissement du champ radio à l'emplacement momentanément effectif du poste d'appel, on calcule les affaiblissements correspondants du champ radio des emplacements immédiatement voisins, et on réalise l'établissement de la liaison à partir de l'emplacement optimal calculé de cette façon, pour lequel l'affaiblissement du champ de radio est minimum.

9. Procédé selon l'une des revendications précédentes, caractérisé en ce que les affaiblissements du champ radio respectivement calculés sont échangés entre eux par plusieurs postes émetteur-récepteur mobiles fonctionnant dans la zone de trafic, et avec des postes opposés éventuellement fixes, et en ce que l'établissement de la liaison a lieu par l'intermédiaire du trajet de liaison radio optimal entre un poste d'appel et un poste opposé sélectionné, le cas échéant par l'intermédiaire de postes émetteur-récepteur voisins mobiles servant de postes relais, trajet pour lequel l'affaiblissement du champ radio est minimum.

10. Procédé selon l'une des revendications précédentes, caractérisé en ce que les données topographiques et morphologiques stockées dans la mémoire de chaque poste mobile sont corrigées et actualisées de façon continue par des observations visuelles du terrain.

11. Procédé selon l'une des revendications précédentes, caractérisé en ce qu'après l'établissement d'une liaison radio entre une station d'appel et une station opposée, on mesure les paramètres radio caractéristiques effectifs et on les stocke en mémoire sous les données de l'emplacement du poste d'appel et/ou du poste opposé.

12. Procédé selon l'une des revendications précédentes caractérisé en ce que les réglages auxquels on procède pour l'établissement d'une liaison radio sur l'émetteur et/ou le récepteur du poste d'appel, sont stockés dans la mémoire sous les données de l'emplacement du poste d'appel et/ou du poste opposé.

13. Procédé selon l'une des revendications précédentes, caractérisé en ce que l'affaiblissement calculé du champ radio est amélioré en répartissant des réflecteurs actifs et/ou passifs dans la zone de trafic.
